# EUROPEAN PATENT APPLICATION

(11) **EP 1 117 191 A1**
(43) Date of publication of application: **18.07.2001**
(21) Application number: 00850002.7
(22) Date of filing: 13.01.2000
(51) Int. Cl.: H04B 3/23

(54) **Echo cancelling method**

(71) Applicant: TELEFONAKTIEBOLAGET LM ERICSSON, 126 25 Stockholm (SE)
(72) Inventor: Walles, Erik, 187 31 Täby (SE)
(74) Representative: Sandström, Staffan Sven

(57) **Abstract**

The invention is concerned with a method of processor dimensioning for high performance operation in a communication network. The function of the processor is performed by means of an algorithm performing a calculation function for each channel to be connected for a communication. In situations, when there is not available capacity to perform the calculation function for each channel, the quality of the algorithm is degraded in a controlled manner to decrease the amount of necessary calculations so that more channels can be handled. When there is not available capacity to perform the calculation function for each channel, the calculation function is degraded by dividing the algorithm into sub functions and by performing only a part of the sub-functions at the momentary calculation peak. The invention is also concerned with a computer program product to perform the method of the invention.

## Description

### TECHNICAL FIELD

The invention is concerned with a method in a telecommunication system. The method is primarily intended to be used as a method of processor dimensioning for high performance operation in packet switched networks, but can also be used in circuit-switched networks. The invention is also concerned with a computer program product for performing the invention.

### BACKGROUND ART

Information can be sent through networks in different ways. Packet switching is a networking method in which nodes share bandwidth with eachother by sending information in form of packets with addressing information in addition to the real message, while circuit switching is a system in which a dedicated physical circuit path must exist between sender and receiver for the duration of a call.

Packet switching technology is more efficient than circuit switching technology, in view of using the resources optimally. On the average, a large number of connections can be supported over a given physical channel in a packet switched network. One part of this transport efficiency is accomplished by dividing the traffic into different priority classes. Traffic with high priority is sent before the traffic with low priority. Furthermore, traffic is only sent through a packet network when there is some information to convey, whereas in a circuit switched network, a channel is dedicated one communication during the whole session. This means that, statistically, in a given traffic situation, a packet switched network can support more connections. ATM (Asynhronous Transfer Mode) and IP (Internet Protocol) are examples of packet switching technology.

For better use of recources, some statistical aspects are currently applied on the recources or devices which handle the traffic in circuit switched networks. Pooling of devices (recources) is a method used in circuit-switched STM (Synchronous Transfer Mode) nodes today. For example, speech coders in GSM (Global System of Mobile Communication) are not semi permanently connected to transmission trunks, but rather allocated from a pool on a peer call basis. Thus, a smaller number of transcoders can support a certain number of trunks.

Some recourses, e.g. Echo Cancellers or Transcoders, use given amounts of calculations on media streams in the processing when performing the functions e.g. to achieve better speech quality respective lower bit rates. Other such resources are for example Error Coding to be able to correct transmission errors, Channel Coding, and Inter Leaving as performed in Radio Base Stations.

Speech quality has become an important factor in modern telephony. A number of connections have an inherent transmission delay that makes echo control necessary. Echo cancelling, which is a modern way of handling the echo problem, is used extensively both in long distance terrestrial or satellite networks and in digital-cellular to PSTN (Public Switched Telephone Network) circuits. The design of the echo canceller plays a vital role in the overall speech quality of telephony systems.

The article "Ericsson echo canceller - a key to improved speech quality", by Anders Eriksson, Gunnar Eriksson, Johnny Karlsen, Anders Roxstrom and Teresa Vallon Hulth, Ericcson Market Communicatons, Ericsson Radio Systems AB, Sweden, 1996, contains a presentation about the technology used in echo cancellers of today, shortly reviewed in the following.

Echo in telephony takes place because incoming speech is reflected back to the talker as a distorted and delayed replica of the incoming speech from the far end. The reflected speech energy is not a problem if the transmission path is short, but will appear as echo with an increased delay. Another cause of echo is acoustic cross talk between the loadspeeker and the microphone in a handset or in a loadspeaking telephone set.

The most usual reason for delay is the use of satellites for intercontinental calls. Another telecom application suffering from delay is digital cellular systems, where it is caused by the speech and channel coding necessary from radio transmission.

The modern way of handling the phenomena of echo is to employ echo cancellers. In digital cellular applications, these devices are located in a mobile switching center, (MSC), in long distance telephony circuits, they are usually located in an international switching centre (ISC).

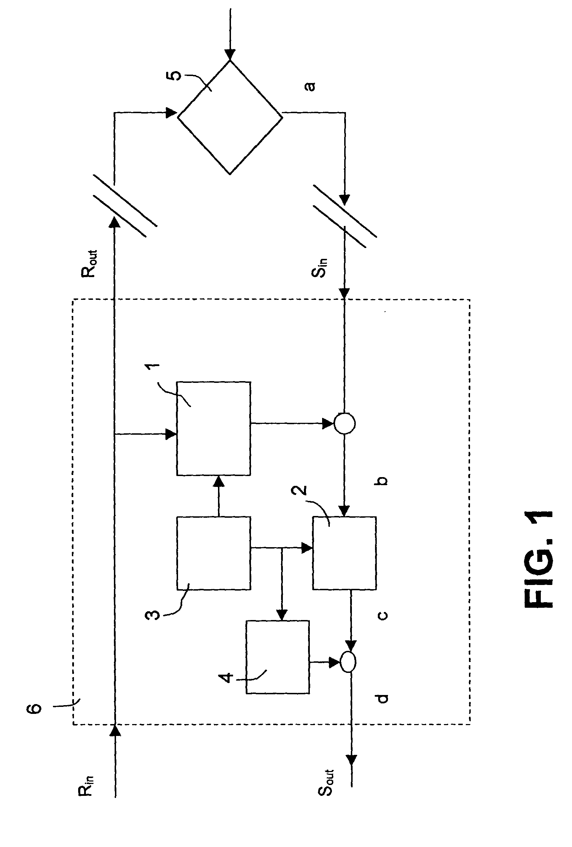

The principle of an echo canceller is shown in figure 1. A replica of the echo Rout is obtained via a linear filter 1 and subtracted from the input signal S_{IN} resulting in a signal b. The residual echo signal, apart of b is further suppressed using a non-linear processor 2. Comfort noise is added in 4. By noise estimation, the existing noise in a call is estimated and sent during a call in non-talking situations, so that it would not be completely quiet during those moments. The hybrid 5 converts a 4-wire connection to/from 2-wire connection.

The filter 1 makes a replica, or estimate, of the echo path. Passing the input signal S_{IN} through the filter 1 generates an estimated echo signal that is subtracted from the received signal S_{IN}, in order to reduce the echo. The echo cancellation performed in 1,2,3 and 4 is performed by a calculation algorithm, that after a given time can evaluate the echo in forward and send out the same echo so that the echo in the received signal can be suppressed. For this purpose, the echo canceller adapt its filter coefficients to the current echo path. Most of today's echo cancellers use an adaptive filter with continuous updating of filter coefficients. The most widely used algorithm for adjusting the filter coefficients is the normalized means squares method (NLMS).

In many situations, the echo reduction obtained by the linear filter is not sufficient. The output from the linear filtering part is therefore passed to a non-linear processor (NLP) 2, which further reduces the echo by blocking the residual echo signal, completely or partially, when it is dominated by non-cancelled (residual echo).

The linear filter and the NLP are the two basic blocks in most echo cancellers. For good echo canceller performance to be achieved, the operation of these two blocks must be governed by control logic 3. The control logic 3 for the linear filter 1 assures that a good estimate of the echo path is obtained. The control logic 3 for the NLP (In the same block in the figure) is responsible for detecting the presence of a large or small amount of non-cancelled echo to be suppressed by the NLP.

The design of the control logic for the adaptive filter and the NLP has a large impact of the overall performance of an echo canceller. The most important part of the control logic of an echo canceller is the part which secures good echo attenuation throughout the call. The two parties are normally talking one at a time, which means that it is clear when to update the filter in order to have a good echo path estimate. But there are also situations when the parties are talking at the same time, referred to as double-talk situations. The adaptation of the filter should then be inhibited, otherwise an erroneous estimate of the echo path is obtained. These two cases can be discriminated by using a double-talk detector, which is a state machine based on comparisons of the power of the measurable signals.

Another part of the control logic is the part which controls when to activate the NLP.

Thus, all the functions in an echo canceller, i.e. the NLP, the Double Talk Detector etc., are not performed all the time, why different amounts of calculations are performed at different times. When a relatively large number of resources, such as Echo Cancellers, Transcoders, Channel Coders etc. are used, it is very unlikely that all resources would need to do their maximum amounts of calculations at the same time. Still, there will be times when the total number of calculations attains an unsustainable level, for example in high load traffic situations. When this occurs, there is for the time being no other available solution in packet-switched networks than to drop one or several packages.

In general, over dimensioning is not used. The number of tasks per processor is evaluated by static means, i.e. the processor is always dimensioned for the worst load situation, which results in a poor average utilization of capacity.

If over dimensioning is used, a common technique in packet-switched networks is to simply drop data packages during momentary high load situations, e.g. the technique used in IP routers of today.

The object of the invention is to develop a method which better makes use of the total capacity so that more tasks per processor can be handled.

A more detailed object of the invention is to develop an optimized method for handling more tasks per processor by taking advantage of statistical properties of traffic situations.

### SUMMARY OF THE INVENTION

The method of the invention is concerned with processor dimensioning for high performance operation in communication networks. In the method, a function of a processor is performed by means of an algorithm performing a calculation function for each channel connected for communication. The method is mainly characterized in that, in situations, when there is not available capacity to perform the calculation function for each channel, the quality of the algorithm is degraded in a controlled manner to decrease the amount of necessary calculations so that more channels can be handled.

Such situations might occur at momentary calculation peaks and the communication network is primarily a packet-switched network but can also be a circuit-switched network. The quality of the algorithm function is degraded in a controlled manner by e.g. dividing it into sub functions with different priorities, so that functions with higher priority are performed in front of functions with lower priority.

The function of one recourse, e.g. an echo canceller or a transcoder, can be divided into subfunctions with different priority levels. In situations with a high traffic load, only high priority sub functions should in accordance with the idea of the invention then be executed for each channel, which provides for a minimum amount of functionality per channel. There will be consequences on for example speech quality in this scenario, but the consequences will not be as sever as when dropping data packages.

As stated above, the goal is to support a larger number of functions per processing unit compared to current implementations in circuit-switched STM nodes and compared to prior art solutions in packet-switched networks. There might be times (which is not assumed to happen often, rather very seldom) when the quality of the service is degraded.

For example an echo cancellation function or algorithm can be divided into one or more of the following sub-functions: 1) filtering, 2) filter updating, 3) double talk detection, 4) non linear processing, 5) noise estimation, and 6) network probing or even in more sub-functions.

In other embodiments of the invention, the calculation algorithm to be divided into subfuntion according to the invention performs another function than echo cancellation, such as a Transcoder function, a Tone Detection function, a Speech Recognition function, a Conference Call Device function, a Modem function, a Radio Base Station Channel Coding function or an Interleaving function etc.

In Echo Cancellation,
the filtering sub-function makes a replica, or estimate, of the echo path, that is subtracted from the received signal, in order to cancel or at least reduce the echo,
the filter updating sub-function estimates filter coefficients, which depend on certain quality measures, and updates them continuously, on average 50% of the time. The updating is performed by means of a algorithm, e.g. the LMS (Least Mean Square) algorithm, for adjusting the filter coefficients,
the double-talk detection sub-function is used to detect a situation, wherein both parties in a call are speaking. The filter updating sub-function is not used in these cases, otherwise an erroneous estimate is achieved,.
the non-linear processing sub-function further reduces the echo after filtering by blocking the residual echo signal completely or partially, when it is dominated by non-cancelled (residual echo). Instead of completely blocking, which could be perceived as a loss of the call, a small noise is sent/inserted.
the noise estimation sub-function estimates the existing noise in a call and send it during a call, so that it would not be completely quiet during those moments, and
the network probing sub-function is performed on operator level. It can for example be used to describe the properties of the network used for an operator , e.g. how good/poor the hybrids are, how much noise there is in the network etc., which information is used by the operator to design the networks.

Out of these functions, only the filtering needs to be done in order to sustain a service that still could be referred to as echo cancellation. There are various consequences for not performing the other sub-functions. For example, if the non linear processor is turned of, there might be a small echo out from the echo canceller. In most cases, this will not cause a too sever quality degradation. Even during normal operation, the non-linear processor is switched of from time to time.

The best benefit of the invention is in systems, wherein a large number of echo cancellation functions are simultaneously performed for a big amount of channels run into the same DSP (Digital Signal Processor) core, which is an enhanced CPU (Central Processing Unit), and wherein the calculations to be performed per time unit in the echo cancellation function varies, i.e. the average need of calculation is lower than the maximum ditto. These systems, i.e. high capacity DSPs, i.e. CPU/DSPs running at a high clock frequency, compared to a 100-200-500 MHz PC, (the PCs are becoming more and more powerful), provide for a better possibility to make use of statistical aspects than systems with a low number of echo cancellation functions and systems requiring a more constant amount of calculations.

DSPs (Digital Signal Processors) which can support a large number of channels will be available shortly; it is the current trend among the major DSP vendors. Examples are the 1 GHz quadruple MAC DSP form Texas Instruments called Galileo, and the 350 MHz Star Core from Motorola and Lucent.

The actual number of channels per DSP is a trade of between speech quality and the number of channels itself.

The invention gives a possibility to base the number of channels used in a DSP on the average need of calculations and not the maximum, which, as mentioned earlier, is the common way to do things in prior art solutions.

The invention is thus especially applicable to high performance CPUs (Central Processing Units), e.g. DSPs (Digital Signal Processors), operating in packet switched nodes and systems.

The method of the invention can be implemented in software, whereby a computer program product performs the method.

In the following, the invention is presented in detail by means of an example applied to an Echo Cancellation algorithm, which is not intended to restrict the invention anyway. The invention can equally well be applied to other recourses, such as Transcoders, Tone Detection functions, Speech Recognition functions, Conference Call Device functions, Modem functions, Radio Base Station Channel Coding functions, Interleaving functions etc.

### FIGURES

Figure 1 shows the principle of an echo canceller.

Figure 2 presents the principle of the invention in form of a flow scheme.

### DETAILED DESCRIPTION

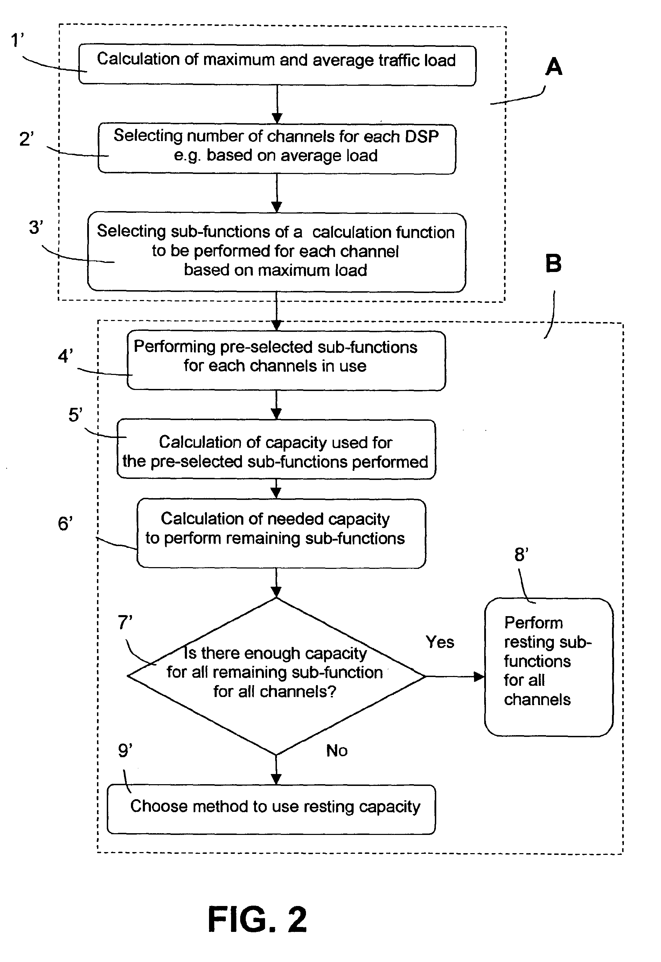

Figure 2 presents the principle of the invention in form of a flow scheme. It is assumed that the invention takes place in a processor, e.g. a DSP, used in a communication network, that can handle a designed amount of communication channels. The processor is used for some resource performing calculations on media streams by means of an algorithm, such as an echo cancellation algorithm, a transcoder algorithm etc.

The maximum load situation that might occur in the designed communication network used as well as the average load is calculated in step 1' of figure 2. The amount of communication channels to be handled in the communication network can in the invention be selected on the basis of the average load or the like in step 2' of figure 2. The idea of the invention is that more channels can be used in the invention without loosing any media streams than in prior art solutions wherein the amount of channels was selected on the basis of the worst situation, which is that of the maximum load. The invention is advantageous in this respect even if fewer channels are used as long as the amount of channels is not designed for the maximum load.

The algorithm performing a calculation function for a given resource in the communication network is in the invention divided into different parts, so called sub-functions, in such a way that the algorithm can be performed either by performing all the sub-functions or only a part of them.

One or more of the sub-functions is/are now selected in step 3' of figure 2 to be performed for each channel in every situation. The sub-functions are selected so that the capacity of the communication system needed to perform them for each channel never exceeds the capacity needed in maximum load situations.

Steps 1', 2' and 3' in figure 2 are performed in the design phase A. The remaining steps 4' - 9' are performed in the communication phase B.

In step 4', the pre-selected sub-functions are performed for each channel in use.

After step 4', the capacity e.g. in form of number of instructions used for performing the pre-selected sub-functions is calculated in step 5' and the capacity needed to perform the remaining sub-functions is calculated in step 6'. The remaining sub-functions are then performed in accordance with available capacity left. An extreme situation would be such that no capacity is left after having performed the pre-selected sub-functions. It depends on the design steps if such a situation is possible. If it is, in step 7' considered that there actually is capacity left to perform all the remaining sub-functions, they are all performed in step 8'. If it is considered that there is not enough capacity left for the remaining sub functions, either or both of the channels and the remaining sub-functions have to be prioritized in front of others in step 9' or in alternative, a round robin scheme is used assuring that all sub-functions will be performed for all channels sooner or later, or by using some kind of a mixture of these methods.

The following is an embodiment example of the invention for a typical situation, which is presented for illustrative purposes.

### EMBODIMENT EXAMPLE

The communication network in this example is assumed to be a DSP with an execution capacity of 10 000 instructions a time.

The DSP used is assumed to perform an echo cancellation algorithm, which is in this example divided in four sub-functions, i.e.
1) Filtering, always needing 100 instructions to complete,
2) Filter updating, needing 0-200 instructions to complete,
3) Double-talk detection, always needing 50 instructions to complete, and
4) Non-linear processing, always needing 50 instructions to complete.

The total number of instructions, i.e. 400, is the peak number when all tasks are performed. Given a certain duration of time, for example one second, the DSP might perform thousands of iterations per channel.

In this example, for one channel of echo cancellation, the peak number of instructions adds up to 400. If peak allocation should be applied, as in prior art solutions, each DSP should be able to handle 10 000/400 = 25 channels.

If it is considered that, sub function 2 - on the average - only runs during half of the iterations, the CPU usage is only 300/400 = 75%. This means that each DSP could, on average, run 10 000/300 = 33 channels.
33 channels are therefore run at every DSP in this example. In a way according to the invention, the echo cancellation algorithm, is performed in the following way:
1.Sub functions 1, 3 and 4 are performed for each channel (1 - 33). Which can be maximum 33. A note or record on the need to perform sub function 2 is made. (It is not noted to be needed at for example double-talk situations).
2. The total number of instructions used so far is calculated. The total number of instructions is redated to the currently served number of channels (anything between 0 and 33), which is between 150 and 200 for each channel.
3. The number of instructions needed to update (to perform sub function 2) all channels that have been marked for update in step 1) is calculated, which is between 150 and 200 for each channel.
4. If the remaining number of instructions are sufficient, all channels that are marked for update are updated.
5. If the remaining number of instructions are insufficient, as many marked channels as possible are updated.

Which channels to update in step 5 might be selected according to some simple round robin scheme, or more advanced - taking into account different service classes. That is, a call via a low cost subscription might be down prioritized in favour of a high cost ditto.

## Claims

1. Method of processor dimensioning for high performance operation in a communication network, in which method the function of the processor is performed by means of an algorithm performing a calculation function for each channel to be connected for a communication, **characterized** in that, in situations, when there is not available capacity to perform the calculation function for each channel, the quality of the algorithm is degraded in a controlled manner to decrease the amount of necessary calculations so that more channels can be handled.

2. Method of claim 1, **characterized** in that if there is not available capacity to perform the calculation function for each channel, the calculation function is degraded by dividing the algorithm into sub functions and by performing only a part of the sub-functions at the momentary calculation peak.

3. Method of claim 2, **characterized** in that if there is not enough capacity to perform all sub-functions, the sub-functions to be performed are selected by prioritizing some sub-functions in front of others.

4. Method of claim 2, **characterized** in that if there is not enough capacity to perform all sub-functions, the channels used are prioritized so that more sub-functions are performed for prioritized channels.

5. Method of claim 4, **characterized** in that the channels are prioritized in accordance with a simple round robin scheme.

6. Method of claim 4, **characterized** in that the channels are prioritized in accordance with different service classes.

7. Method of any of claims 1 - 6, **characterized** in that the algorithm is an echo cancellation algorithm.

8. Method of claim 7, **characterized** in that the echo cancellation algorithm function is divided into one or more of the following sub functions including filtering as a necessary sub-function:
filtering,
filter updating,
double talk detection,
non linear processing,
noise estimation, and
network probing.

9. Method of claim 8, **characterized** in that when some sub-functions are prioritized in front of others, the priority order of the sub-functions are filtering, non linear processing, filter updating, double talk detection, noise estimation, and network probing.

10. Method of any of claims 2 - 9, **characterized** in that the prioritisation of sub-functions to be performed for the different channels used is performed by
performing pre-selected sub-functions for each channel, whereby the performance of the sub-functions have been considered not to exceed the total capacity of the communication network for performing the algorithm,
calculating the capacity in form of number of instructions used for the pre-selected sub-functions,
calculating the number of instructions needed to perform the remaining sub-functions,
performing the remaining sub-functions in accordance with available capacity left.

11. Method of any of claims 1 - 10, **characterized** in that the number of channels used in the communication network is based on the average need of calculations for performing the algorithm.

12. Computer program product used for processor dimensioning for high performance operation in a communication network, the computer program product performing the function of the processor by means of an algorithm performing a calculation function for each channel to be connected for a session, **characterized** in that at momentary calculation peeks, when there is not available capacity to perform the calculation function for each channel, the computer program product degrading the quality of the algorithm in a controlled manner to decrease the amount of necessary calculations so that all channels can be handled.

13. Computer program product of claim 12, **characterized** in that it performs the method of any of claims 1 -10.
